# EUROPEAN PATENT SPECIFICATION

(11) **EP 1 460 280 B1**
(45) Date of publication and mention of the grant of the patent: **31.05.2006**
(21) Application number: 03005350.8
(22) Date of filing: 12.03.2003
(51) Int. Cl.: F16B 37/04

(54) **Fastener and shelf or cabinet including at least one fastener**
Befestigungselement und ein Regal oder Schrank mit mindestens einem Befestigungselement
Elément de fixation et un étagère ou armoire comprenant au moins un element de fixation

(43) Date of publication of application: 22.09.2004
(73) Proprietor: 3M Innovative Properties Company, St. Paul, Minnesota 55133-3427 (US)
(72) Inventor: Hoeschler, Peter,, 41453 Neuss (DE); Gorontzi, Armin, 58313 Herdecke (DE)
(74) Representative: HOFFMANN EITLE

(56) References cited:
- FR-A- 2 583 469
- US-A- 2 875 804

## Description

### Field of the Invention

The invention relates to a fastener and a shelf or a cabinet including at least one fastener.

Fasteners are used in numerous technical fields in order to fix any type of objects to each other. The structure and specific function of the fastener strongly depends on the type of objects as well as the forces which can be expected to act on the objects and/or the fastener. As an example, in the field of cabinets or shelves, e.g. in the field of switch cabinets, particularly more so for cabinets in the field of telecommunications, fasteners are used to locate panels or plates on frame members. In this context, it is desirable to enable the fastener to be fastened from a single side without the need to manipulate the fastener or a part thereof from another side. A front side, e.g. of a cabinet or shelf, is preferred for handling the fastener. Furthermore, it is desirable to form the fastener in a way in which the items to be fastened are not only fixed to each other but rather an electrical connection should be established by means of the fastener in order to provide an earthed electrical connection.

### Background

DE 201 04 604 U1 discloses a fastener having at least one projection, which is adapted to work the edge of an opening, into which the fastener can be inserted. A screw can be screwed into the fastener so as to deflect at least one spring tab, which, in the deflected state, applies a clamping force to the items to be fastened.

### Summary of the Invention

The invention provides a fastener which can be handled in an easy manner and reliably provides a clamping force to the objects to be fixed to each other as well as an electrical connection.

The novel fastener is insertable into an opening having an edge. The fastener has a body and a thread member, which can slide within the body. The thread member is slideable in a sliding direction. The body has a front with a stop for abutting at the edge of the opening. A screw with a screw head is insertable through the front of the fastener. The thread member is adapted to engage with the screw so as to move the thread member in a sliding direction towards the front, when the screw head abuts the front of the fastener. The body and/or the thread member has a thickened portion, which applies a clamping force when the thread member is moved in a sliding direction. Finally, the body and/or the thread member is made of metal and has a portion adapted to engage with the edge of the opening, into which the fastener is insertable.

Firstly, it is worth mentioning that the fastener, in the body of which the thread member is held, is insertable into an opening from a side thereof, which will be referred to as the front side. In particular, the fastener is insertable from the front side and is ready for being activated and performing its function without the need for handling or manipulating the fastener at the rear side thereof. Thus, in the case where two objects are to be fixed to each other, these objects having suitable openings are located correctly with regard to each other, and the fastener is inserted through the openings thereof. As described in more detail below, a stop at the front of the fastener prevents the fastener from being pushed through the openings. Furthermore, as detailed below, at least a portion of the fastener extends from the openings at the rear side thereof. This portion is then activated in a manner to apply a clamping force acting on the members to be fixed to each other. Thus, the fastener, including a body and a thread member held therein, is insertable into an opening from the front side.

The body of the fastener including various portions, as detailed below, can also be considered as a cage. In particular, the body does not necessarily have to be closed. The body can be made from a single piece of sheet metal from which various tabs and legs, including specific features thereof as detailed below, can be stamped and suitably bent. The thread member is held in the body so as to be slideable in a sliding direction. As mentioned, the body has a front with a stop for abutting at the edge of the opening, into which the fastener is insertable. As an example, the body can have one or more tabs or projections which extend from the body at the front thereof so as to prevent the fastener from moving all the way through the opening. A screw with a screw head is insertable through the front. When the screw is inserted through the front, it will engage with the thread member. In particular, the thread of the screw corresponds to the internal thread of the thread member. It should be mentioned that the screw can be a standard screw, e.g. an M6 size thread. When the screw is threaded into the thread member, the screw head moves towards the front of the fastener and eventually abuts at the front. For this purpose, a hole or opening can be formed in the front of the fastener that is large enough to allow the shaft or bolt of the screw to be inserted but will provide a stop for the screw head. As an alternative, a larger hole or opening area can be provided at the front of the fastener, and the screw can be combined with a washer so as to provide the described abutment.

As soon as the screw abuts at the front of the fastener, and rotation of the screw is continued, the threading engagement between the screw and the thread member will pull the thread member towards the front of the fastener. In order to provide a clamping force as a result of this movement, the body and/or the thread member of the fastener has a thickened portion. In particular, the thickened portion is designed to allow the fastener to be inserted into an opening with a defined size. However, the described sliding movement of the thread member in the sliding direction will cause the thickened portion to cooperate with further portions of the fastener, i.e. of the body or the thread member thereof, so as to result in a size, which will prevent the fastener from moving out of the opening. Rather, the described activation of the thickened portion will apply a clamping force to those objects, which are to be fixed by means of the described fastener. As an example, the body of the fastener can be thickened at a certain portion, to which the thread member moves, when it is pulled towards the front by the action of the screw. By cooperation with the thread member and the thickened portion, at least portions of the fastener become larger in size than the opening, into which the fastener was inserted. These portions will abut at the inner edge of the opening, in particular on an inner object, so as to clamp the inner object to the outer object.

Furthermore, the body and/or the thread member is made of metal and has a portion adapted to engage with the edge of the opening, into which the fastener was inserted. This engagement will be suitable for working the edge of the opening, which can be coated by oxide films, paint or powder coatings, etc. in order to expose the metal of the object to be fixed. As the body and/or the thread member, which has the described engaging portion, is also made of metal, an electrical connection can be established between the fastener and the object to be fixed. Thus, by a very simple procedure of fixing the fastener, objects cannot only be fixed to each other, but also an electrical connection can be established. Particularly in the field of shelves or cabinets containing electrical devices such as switches, a earth connection should be established for all parts of the shelf or cabinet. By means of the novel fastener, these connections can be provided.

Furthermore, the novel fastener has superior handling properties. In particular, it only has to be inserted from one side, e.g. the front side. As soon as the screw is inserted, which can also be conducted from the front side, the fastener can be activated and a clamping force can be applied. This easy assembly also reduces the time which is required to fix two items to each other. It should also be mentioned that the screw can be provided premounted in the fastener. For example, the screw can be screwed a short distance into the thread member, particularly until the head of the screw abuts the front of the fastener. In this state, the fastener can be inserted into the opening. As soon as the screw is rotated from this state, the thread member is moved towards the front and the clamping action is initiated.

It should be mentioned that the fastener is preferably adapted for the so-called 19 inch technology. Thus, the fastener can be adapted for square openings with a side length of 9.5 mm. As regards the general properties of the fastener, the method of applying the fastener and fixing objects to each other as well as the specific situations, in which the fasteners can be used and the type of items which can be fixed to each other, reference is made to DE 201 04 604 U1, the disclosure of which is incorporated herein by means of reference. It should, furthermore, be mentioned that two sheet metal items can be prefixed by means of the fastener alone, i.e. without a screw being inserted. As outlined above, the fastener is adapted to be inserted into holes formed in the sheet metal items. As a consequence as soon as the fastener is inserted, the sheet metal items cannot be displaced relative to each other anymore. In particular, a number of fasteners can be inserted into a number of openings. The final fixing procedure can be conducted for all fasteners, after all of these have been inserted, by additionally inserting a screw in each of the fasteners, bringing the screw into engagement with the thread member, turning the screw and thus applying the clamping force. Moreover, the fastener can be inserted in a sheet metal item alone, in order to fix another item to the first item. In this situation, the fastener is inserted, and the second item is applied. In particular, the openings of the second item do not have to include openings, which are suitable for the insertion of the fastener. The openings merely have to be adapted to allow the insertion of a screw. The opening of the second item is aligned with the opening of the fastener. Afterwards, the screw is inserted through the mentioned openings. After bringing the screw into engagement with the thread member and applying the clamping force, the second item is fixed by means of the screw, and the required counterforce is applied by the fastener clamped with the first item. In this manner, the novel fastener has a remarkable flexibility with regard to the type and configuration of the second item, which is to be fixed to the first item.

The portion of the body and/or the thread member made of metal that is adapted to engage with the edge of the opening, into which the fastener is inserted, can be formed as a cutting edge. In particular, the cutting edge can extend a certain length in a sliding direction. This direction corresponds to the direction in which the sheet metal of the items, which are to be fixed to each other, are stacked. Thus, when the cutting edge has a certain length in this direction, the fastener is applicable to different thicknesses of sheet metal of the items to be fixed and/or different numbers of items to be fixed to each other. As an example, the cutting edge can extend from a distance of 1 mm to a distance of 5 mm from the front of the fastener. Thus, one or a plurality of metal sheets with a total thickness between 1 mm and 5 mm can be contacted by means of the fastener, particularly by the cutting edge which is adapted to cut through oxide films or any type of coating provided at the opening.

As regards the specific design of the thickened portion described above, the body can have at least one side leg having at least one bead, or thickening, or protrusion. The at least one side leg extends from the front of the fastener in a direction approximately parallel with the sliding direction. The at least one bead of the side leg will cooperate with the thread member in the following manner. As the thread member moves along the sliding direction, i.e. along the side leg, it will reach the at least one bead and, as a consequence, deflect the side leg. This deflection of the side leg, in particular at the bead thereof, will lead to a fastener size which will prevent the fastener from moving out of the opening. Rather, a clamping force will be applied to the items to be fixed.

The described bead can have any orientation. Thus, the bead can extend nonparallel to the sliding direction. In other words, on the at least one side leg, a bead is formed in the form of a projection, which extends towards the thread member at a particular level of the side leg, as seen in the sliding direction. This bead will cooperate with the thread member in the above-described manner.

When the thickened portion is formed on the thread member, the thread member can have at least one wedge portion which tapers towards the front of the fastener. In other words, the thread member is thickened at a rear portion as compared to a front portion. In the initial state, the thickened portion of the thread member is, as well as the remainder of the fastener, insertable through the opening. However, as the thread member moves towards the front of the fastener, the thickened portion will reach a part of the fastener, where in addition the material of the body is present. The combination of the thickened thread member and the material of the body will provide the desired clamping force.

The thickened portion can also be formed on the thread member in a direction perpendicular to the sliding direction. In other words, the thread member can include, in a circumferential direction thereof, narrower portions and wider portions. In the initial state, the wider portions can be arranged with regard to the remainder of the fastener so as to allow the fastener to be inserted into the opening. In order to activate the fastener, the thread member is rotated about an axis which is parallel with the sliding direction. One or more stops can limit this rotation in a certain position. In particular, in this end position, the thread member in combination with the body of the fastener, can obtain a shape which prevents the fastener from moving out of the opening and allows the application of the clamping force.

The handling properties of the novel fastener are further improved when the screw is premounted with the thread member. Thus, the fastener consisting of the body, in which the thread member is slideably held, and the screw, which is already at least somewhat engaged with the thread member, can be inserted into the opening. Fixing can then be performed by rotating the screw so as to move the thread member towards the front of the fastener.

The thread member can be securely and reliably held by at least one side leg of the body of the fastener.

The body of the fastener can be made of spring steel. This facilitates disassembly of the novel fastener. In particular, when the screw is loosened and the thread member is returned to its initial position, the body of the fastener, in particular any deflected portions thereof, return to their initial state. As the fastener was inserted into the opening in this state, it can then also be easily removed therefrom in the same state.

The invention also provides a shelf or cabinet including at least one fastener as described above. In particular, the shelf or cabinet can be a distribution, cable or switch shelf or cabinet, particularly in the field of telecommunications. As indicated above, the shelf or cabinet can be adapted for the field of 19 inch technology.

### Brief Description of the Drawings

The invention is described hereinafter by means of nonlimiting examples and with reference to the drawings, in which
- Fig. 1: shows a first embodiment of the fastener in a perspective view;
- Fig. 2: shows the fastener of Fig. 1 in a perspective view from the rear thereof;
- Fig. 3: shows a second embodiment of the fastener in a perspective view;
- Fig. 4: shows the fastener of Fig. 3 in a perspective view from the rear thereof;
- Fig. 5: shows a third embodiment of the fastener in a perspective view; and
- Fig. 6: shows the fastener of Fig. 5 in a perspective view from the rear thereof.

### Description of Preferred Embodiments

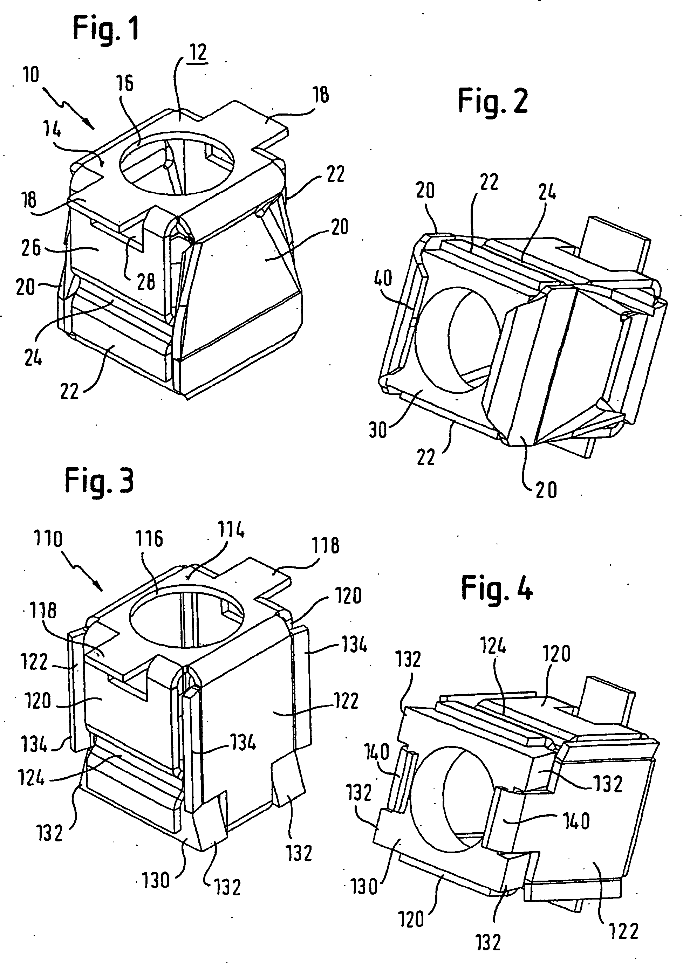

Fig. 1 shows a first embodiment of the fastener 10 in a perspective view. The fastener 10 has a body 12 and a thread member, which is not visible in the drawing. The body has a front 14, in which an opening 16 is formed, through which a bolt of a screw (not shown) can be inserted. In the case shown, the opening 16 is circular. The opening 16 can, but does not have to be, formed as a thread. The opening 16 can be formed somewhat larger than the bolt of a screw, which is to be inserted therethrough. Thus, the screw can be inserted until it engages with the internal thread of the thread member, which is located in the rear area of the fastener 10 and which is not visible in the drawing. In the case shown, the body 12 of the fastener 10 comprises a stop in the form of two tabs 18, which extend laterally. In particular, the tabs 18 extend from the remainder of the fastener 10, which is adapted to be inserted into a square opening of an item to be fixed (not shown). Thus, the fastener 10 can be inserted into the opening until the surfaces of the tabs 18, which are the lower surfaces as shown in Fig. 1, abut the edge of the opening.

As soon as the fastener has been inserted, a screw can be inserted through the opening 16 and can engage with the thread member. In the case shown, the thread member is held by holding legs 20 which are located opposite each other. At the rear of the fastener 10, shown as the lower side in Fig. 1, the holding legs 20 are at least slightly bent towards each other so as to prevent the thread member from falling from the fastener 10. At the remaining sides of the fastener 10, two clamping legs 22 are provided opposite each other. In the case shown, each of the clamping legs 22 is formed with a bead 24 extending nonparallel to the sliding direction, which is the direction of the axis of the screw, which is insertable through opening 16. The beads 24 of the clamping legs 22 are formed so as to project towards each other. Thus, when the head of the screw (not shown) abuts at the front 14, and the screw is continuously rotated, this rotation will pull the thread member towards the front of the fastener 10. In this connection, the thread member will reach the beads 24. As the gap between the beads 24 will be smaller than the size of the thread member, the described movement of the thread member will deflect the clamping legs 22 in an outside direction, i.e. away from each other. This deflection will apply a clamping force to any items, through the openings of which the fastener has been inserted. The sheet metal thereof will be located, as shown in Fig. 1, underneath the lower surface of the tabs 18. Thus, the surface 26 of the clamping legs 22 will contact and engage with the opening of the objects to be fixed. It has been found that the pressure applied by the deflection of the clamping legs is large enough to remove oxide films, paint or other coatings so as to establish an electrical connection with the sheet metal of the item to be fixed and the body 12 of the fastener 10. In the case shown, the body 12 of the fastener 10 is made of metal so as to establish the desired electrical connection. In the case shown, the tabs 18 are formed from those sections, which form the clamping legs 22, so as to leave windows 28.

Fig. 2 shows the fastener of Fig. 1 from the rear thereof. As can be seen from the drawing, the thread member 30 is held by inwardly bent portions 40 of the holding legs 20. As can be seen in the upper and lower part of the figure, the thread member 30 is relatively precisely fitted between the clamping legs 22. Thus, when the thread member 30 is moved towards the front, the right direction in Fig. 2, it reaches the beads 24 formed in the clamping legs. As the gap between the beads 24 is smaller than the size of the thread member 30, the clamping leg 22 will be deflected and the desired clamping force will be applied.

The embodiment of the fastener 110 shown in Fig. 3, is similar to the embodiment of Fig. 1, with regard to the front 114 including the opening 116 and the tabs 118. Also the left leg 120, visible in Fig. 3, is similar to the clamping leg 22 of the embodiment of Fig. 1. However, this left leg 120 as well as the opposite leg, which is not visible in Fig. 3, are holding legs 120, which are adapted to hold the thread member 130, of which a part is visible in the lower portion of Fig. 3. It should be noted that the bead 124 of the holding legs 120 can be adapted to merely hold the thread member 130. As can be seen in the drawing, the thread member 130 comprises, in the case shown, four wedge portions 132. In the initial state, as shown in Fig. 3, the thread member 130 including the wedge portions 132 is of a size so as to be insertable into an opening of a sheet-metal item, for which the fastener is suitable. However, when the thread member 130 is moved towards the front 114 by means of a screw (not shown), the wedge portions 132 including their thickened rear ends also move towards the front and serve to deflect the clamping legs 122. As the material of the clamping leg 122 will then be present, in addition to the thickened end of the wedge portion 132, the described portions will be bigger than the opening, through which the fastener 110 was inserted. Thus, the deflected clamping legs 122 will engage with the rear edge of the opening, which is formed in the sheet-metal item, into the opening of which the fastener was inserted. In the case shown, each clamping leg 122 is formed with lateral cutting edges 134. In the course of the described deflection, these cutting edges 134 cut through oxide films, paint or any other coatings which might be present at the edge of the opening. Thus, electrical connection is established. As the cutting edges 134 have a certain extension in the sliding direction of the thread member, i.e. in the direction of the screw axis, the fastener 110 is flexible with regard to the total material thickness of the items to be clamped. As long as the edge of the one or more openings of the one or more sheet-metal items, in which the fastener 110 was inserted, is located at any position along the cutting edges 134, the described cutting through paint and so on can be achieved, and electrical connection can be established.

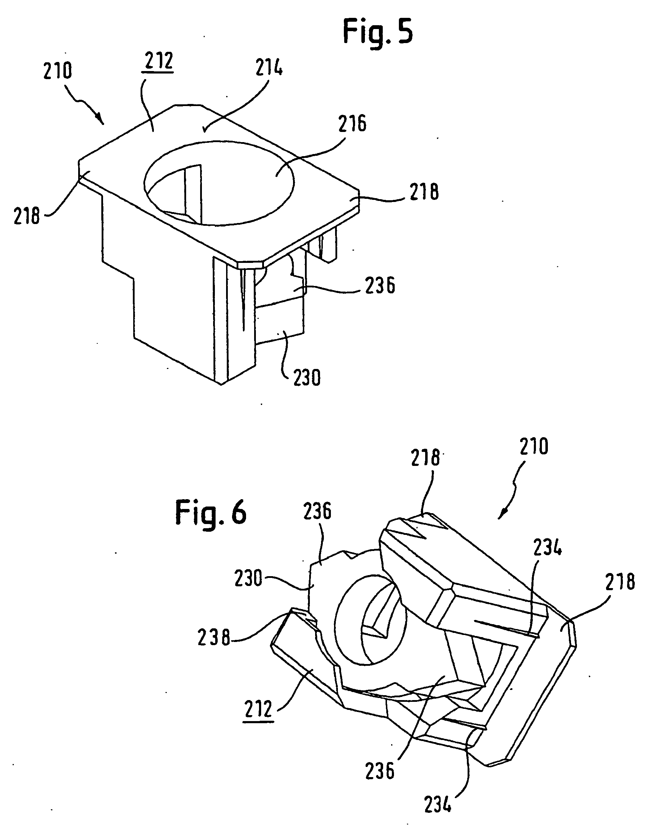

Fig. 4 shows the fastener of Fig. 3 from the rear thereof. In the case shown, each of the clamping legs 122 comprises an inwardly bent portion 140 which serves to hold the thread member 130 in place. In the case shown, the thread member 130 is also accurately fitted between the holding legs 120. This can be seen in the upper and lower part of the drawing. In this embodiment, a double acting clamping force can be used. Firstly, as described above, when the thread member 130 is moved towards the front, i.e. the right side in Fig. 4, its wedge portions 132 will serve to deflect the clamping legs 122. Furthermore, those sides of the thread member, the upper and lower side in Fig. 4, that are located adjacent the holding legs 120, will reach the beads 124 formed therein. In this manner, clamping force is also effected in the holding legs 120, as described above with regard to the clamping legs 122 shown in Figs. 1 and 2.

Fig. 5 shows a further embodiment of the fastener 210. At the front 214, the body 212 again comprises an opening 216, through which a screw (not shown) can be inserted, as well as two lateral tabs 218 for providing a stop, when the fastener 210 is inserted into an opening. In this embodiment, the thread member 230 comprises at least one thickened portion 236, which is formed in a radial direction, i.e., the thickened portion 236 extends farther.from the axis of the screw (not shown) than other portions of the thread member. As mentioned, the fastener is adapted to be inserted into square openings. In the initial state of the embodiment of Fig. 5, the fastener 210 is insertable into such an opening, as the thickened portion 236 is located in the diagonal of the square opening. However, the thread member 320 is rotatable about the axis of the screw. Thus, when the screw engages with the internal thread of the thread member, it will first rotate the thread member until stops, such as the stop 238 (see Fig. 6) provided on the thread member 230, limit this rotation. The described rotation brings the thickened portion 236 from its position along the diagonal of the square opening in a position "outside" the square opening. Thus, the thread member 230 can, in this end position, not leave the opening.

Rather, a clamping force will be applied to any items, through the openings of which the fastener 210 was inserted.

Fig. 6 shows a rear view of the fastener 210 of Fig. 5. As can be taken from the drawing, the thread member 230 comprises two thickened portions 236 which are formed on opposite sides thereof. The drawing shows a situation in which the thread member 230 has been rotated by a screw (not shown) until a stop 238 of the thread member 230 abuts a portion of the body 212. It should be mentioned that the distance between the ends of the thickened portion 236 is longer than the size of the body, apart from the tabs 218 which form a stop. The size of the body 212, apart from the tabs 218, substantially correspond with the size of the opening into which the fastener can be inserted. Thus, in the rotated state shown in Fig. 6, the thread member 230 has an orientation in which at least the thickened portions 236 extend beyond the edges of the opening into which the fastener was inserted. Thus, the fastener cannot leave the opening anymore. The thickened portion will abut the edges of the fastener and apply the desired clamping force.

In the initial state (not shown in the figures) the thickened portions 236 are located in the diagonal of the opening, i.e. within the boundaries of the body 212 so as to allow the insertion of the fastener into the opening. The initial state is obtained from the situation shown in Fig. 6 by means of a rotation of the thread member 230 in a clockwise direction for approximately 45 degrees. Sharp edges 234 can be provided on the body 212 in order to cut through paint or other coatings, which can be present in the opening and establish electrical connection between the items to be fixed and the body 212 of the fastener.

## Claims

1. A fastener (10, 110, 210), which is insertable into an opening having an edge and which has a body (12, 112, 212) and a thread member (30, 130, 230), the thread member (30, 130, 230) being held in the body (12, 112, 212) so as to be slidable in a sliding direction, the body (12, 112, 212) having a front (14, 114, 214) with a stop (18, 118, 218) for abutting at the edge of the opening, a screw with a screw head being insertable through the front (14, 114, 214), the thread member (30, 130, 230) being adapted to engage with the screw so as to move the thread member in the sliding direction towards the front (14, 114, 214) when the screw head abuts the front (14, 114, 214), the body (12, 112, 212) and/or the thread member (30, 130, 230) having a thickened portion (24, 132, 236) applying a clamping force, when the thread member (30, 130, 230) is moved in the sliding direction, and the body (12, 112, 212) and/or the thread member (30, 130, 230) being made of metal and having a portion (26, 134) adapted to engage with the edge of the opening.

2. The fastener in accordance with claim 1, wherein the portion adapted to engage with the edge of the opening is a cutting edge (134).

3. The fastener in accordance with claim 1 or 2, wherein the body (12) has at least one clamping leg (22) having at least one bead (24).

4. The fastener in accordance with claim 3, wherein the bead (24) extends nonparallel to the sliding direction.

5. The fastener in accordance with any of the preceding claims, wherein the thread member (130) has at least one wedge portion (132) which tapers towards the front (114) of the fastener (110).

6. The fastener in accordance with any of the preceding claims, wherein the thread member (230) has a thickened portion (236) formed in a direction perpendicular to the sliding direction, the thread member (230) being rotatable about the sliding direction within set limits.

7. The fastener in accordance with any of the preceding claims, wherein the screw is premounted with the thread member.

8. The fastener in accordance with any of the preceding claims, wherein the thread member (30, 130) is held by at least one holding leg (20, 120) of the body (12, 112).

9. The fastener in accordance with any of the preceding claims, wherein the body (12, 112, 212) is made of spring steel.

10. Shelf or cabinet, in particular distribution, cable or switch shelf or cabinet, including at least one fastener in accordance with at least one of the preceding claims.

## Patentansprüche

1. Befestigungselement (10, 110, 210), das in eine Öffnung einfügbar ist, die eine Kante hat und einen Körper (12, 112, 212) sowie ein Gewindeelement (30, 130, 230) hat, wobei das Gewindeelement (30, 130, 230) in dem Körper (12, 112, 212) gehalten wird, so dass es in eine Schieberichtung geschoben werden kann, wobei der Körper (12, 112, 212) eine Vorderseite (14, 114, 214) mit einem Stopp (18, 118, 218) zum Anschlagen an der Kante der Öffnung hat, wobei eine Schraube mit einem Schraubenkopf durch die Vorderseite (14, 114, 214) einschraubbar ist, wobei sich das Gewindeelement (30, 130, 230) in die Schraube einfügen kann, um das Gewindeelement in die Schieberichtung zu der Vorderseite (14, 114, 214) zu bewegen, wenn der Schraubenkopf an der Vorderseite (14, 114, 214) anschlägt, wobei der Körper (12, 112, 212) und/oder das Gewindeelement (30, 130, 230) einen verdickten Teil (24, 132, 236) hat, der eine Klemmkraft anlegt, wenn das Gewindeelement (30, 130, 230) in die Schieberichtung bewegt wird, und wobei der Körper (12, 112, 212) und/oder das Gewindeelement (30, 130, 230) aus Metall hergestellt ist und einen Abschnitt (26, 134) hat, der in die Kante der Öffnung eingreifen kann.

2. Befestigungselement nach Anspruch 1, wobei der Abschnitt, der in die Kante der Öffnung eingreifen kann, eine Schneidkante (134) ist.

3. Befestigungselement nach Anspruch 1 oder 2, wobei der Körper (12) mindestens ein Klemmbein (22) hat, das mindestens einen Wulst (24) hat.

4. Befestigungselement nach Anspruch 3, wobei sich der Wulst (24) nicht parallel zu der Schieberichtung erstreckt.

5. Befestigungselement nach einem der vorhergehenden Ansprüche, wobei das Gewindeelement (130) mindestens einen Keilabschnitt (132) hat, der sich zur Vorderseite (114) des Befestigungselements (110) verjüngt.

6. Befestigungselement nach einem der vorhergehenden Ansprüche, wobei das Gewindeelement (230) einen verdickten Abschnitt (236) hat, der in eine Richtung im rechten Winkel zu der Schieberichtung ausgebildet ist, wobei das Gewindeelement (230) um die Schieberichtung innerhalb festgelegter Limits drehbar ist.

7. Befestigungselement nach einem der vorhergehenden Ansprüche, wobei die Schraube in das Gewindeelement vormontiert ist.

8. Befestigungselement nach einem der vorhergehenden Ansprüche, wobei das Gewindeelement (30, 130) von mindestens einem Haltebein (20, 120) des Körpers (12, 112) gehalten wird.

9. Befestigungselement nach einem der vorhergehenden Ansprüche, wobei der Körper (12, 112, 212) aus Federstahl besteht.

10. Schrank oder Gehäuse, insbesondere Verteiler-, Kabel- oder Schaltschrank oder -gehäuse mit mindestens einem Befestigungselement nach mindestens einem der vorhergehenden Ansprüche.

## Revendications

1. Elément de fixation (10, 110, 210) pouvant être inséré dans une ouverture présentant un bord, et comprenant un corps (12, 112, 212) et un élément fileté (30, 130, 230), l'élément fileté (30, 130, 230) étant maintenu dans le corps (12, 112, 212) de manière à pouvoir glisser dans une direction de glissement, le corps (12, 112, 212) présentant une face avant (14, 114, 214) comportant un arrêt (18, 118, 218) destiné à venir buter contre le bord de l'ouverture, une vis présentant une tête de vis pouvant être insérée à travers la face avant (14, 114, 214), l'élément fileté (30, 130, 230) étant adapté pour s'engager avec la vis de manière à déplacer l'élément fileté dans la direction de glissement vers la face avant (14, 114, 214) lorsque la tête de vis vient buter contre la face avant (14, 114, 214), le corps (12, 112, 212) et/ou l'élément fileté (30, 130, 230) présentant une partie épaissie (24, 132, 236) appliquant une force de serrage, lorsque l'élément fileté (30, 130, 230) est déplacé dans la direction de glissement, et le corps (12, 112, 212) et/ou l'élément fileté (30, 130, 230) étant constitué(s) de métal et présentant une partie (26, 134) adaptée pour s'engager avec le bord de l'ouverture.

2. Elément de fixation selon la revendication 1, dans lequel la partie adaptée pour s'engager avec le bord de l'ouverture est un bord coupant (134).

3. Elément de fixation selon la revendication 1 ou 2, dans lequel le corps (12) comprend au moins un pied de serrage (22) comprenant au moins un talon (24).

4. Elément de fixation selon la revendication 3, dans lequel le talon (24) s'étend d'une façon non parallèle à la direction de glissement.

5. Elément de fixation selon l'une quelconque des revendications précédentes, dans lequel l'élément fileté (130) présente au moins une partie en coin (132) qui s'amincit en direction de la face avant (114) de l'élément de fixation (110).

6. Elément de fixation selon l'une quelconque des revendications précédentes, dans lequel l'élément fileté (230) présente une partie épaissie (236) formée dans une direction perpendiculaire à la direction de glissement, l'élément fileté (230) pouvant tourner autour de la direction de glissement à l'intérieur de limites établies.

7. Elément de fixation selon l'une quelconque des revendications précédentes, dans lequel la vis est prémontée avec l'élément fileté.

8. Elément de fixation selon l'une quelconque des revendications précédentes, dans lequel l'élément fileté (30, 130) est maintenu par au moins un pied de support (20, 120) du corps (12, 112).

9. Elément de fixation selon l'une quelconque des revendications précédentes, dans lequel le corps (12, 112, 212) est constitué d'un acier à ressorts.

10. Etagère ou armoire, en particulier étagère ou armoire de distribution, à câbles ou électrique, comprenant au moins un élément de fixation selon au moins l'une des revendications précédentes.
